# EUROPEAN PATENT APPLICATION

(11) **EP 4 418 781 A1**
(43) Date of publication of application: **21.08.2024**
(21) Application number: 23822615.3
(22) Date of filing: 16.01.2023
(51) Int. Cl.: H04W 72/02

(54) **DATA COMMUNICATION METHOD AND APPARATUS, BASE STATION DEVICE, AND COMPUTER READABLE STORAGE MEDIUM**

(30) Priority: 14.06.2022 CN 202210672361
(71) Applicant: ZTE Corporation, Shenzhen, Guangdong 518057 (CN)
(72) Inventor: ZHANG, Wanchun, Shenzhen, Guangdong 518057 (CN); WU, Feng, Shenzhen, Guangdong 518057 (CN); WANG, Lingbin, Shenzhen, Guangdong 518057 (CN)
(74) Representative: Osterhoff, Utz
(86) International application number: PCT/CN2023/072384
(87) International publication number: WO 2023/241043

(57) **Abstract**

Disclosed are a data communication method, a data communication device, a base station equipment and a computer-readable storage medium. The method includes: receiving an SR initiated by a user side, and determining a PUSCH resource corresponding to the SR, wherein the PUSCH resource is an air interface resource pre-configured for the SR; determining whether the user side initiates uplink data according to the SR; in response to that the user side initiates the uplink data, processing the uplink data according to the PUSCH resource; in response to that the user side does not initiate the uplink data, releasing the PUSCH resource.

## Description

### CROSS-REFERENCE TO RELATED APPLICATIONS

The present application claims priority to Chinese Patent Application No. CN202210672361.5, filed on June 14, 2022, titled "DATA COMMUNICATION METHOD, DEVICE, BASE STATION EQUIPMENT AND COMPUTER-READABLE STORAGE MEDIUM", the entire contents of which are incorporated herein by reference.

### TECHNICAL FIELD

The present application relates to the technical field of communication, and in particular to a data communication method, a data communication device, a base station equipment and a computer-readable storage medium.

### BACKGROUND

5G technology supports three major applications: Enhanced Mobile Broadband (eMBB), Ultra Reliable Low Latency Communication (uRLLC), and Massive MachineType Communication (mMTC). uRLLC mainly involves two aspects, namely ultra-reliability and low latency. Low latency is a key application indicator of 5G for the toB industry.

During the data communication process between the UE side (user side) and the base station side, it mainly includes uplink data and downlink data. The uplink data process includes the UE side sending a scheduling request (SR), data size (BSR) and data information, while the downlink data process only requires the base station side to feed back packet information to the UE side. Obviously, uplink data has a longer delay than downlink data.

Therefore, how to effectively reduce the uplink data delay and achieve fast and efficient data communication is an urgent problem that needs to be solved by those skilled in the art.

### SUMMARY

In view of this, in order to solve the above-mentioned technical problems, the present application provides a data communication method, a data communication device, a base station equipment and a computer-readable storage medium, which aims to solve the technical problem of how to effectively reduce uplink data delay, thus achieving fast and efficient data communication.

According to a first aspect, the present application provides a data communication method applied to a base station side, including: receiving a scheduling request (SR) initiated by a user side, and determining a physical uplink shared channel (PUSCH) resource corresponding to the SR, wherein the PUSCH resource is an air interface resource pre-configured for the SR; determining whether the user side initiates uplink data according to the SR; in response to that the user side initiates the uplink data, processing the uplink data according to the PUSCH resource; or in response to that the user side does not initiate the uplink data, releasing the PUSCH resource.

In an exemplary embodiment, before the receiving the SR initiated by the user side, the method further includes: obtaining SR resource configuration information and PUSCH resource configuration information; configuring the SR resource according to the SR resource configuration information; and configuring the PUSCH resource according to the PUSCH resource configuration information.

In an exemplary embodiment, the SR resource configuration information includes a resource unit of the SR resource and a resource period of the SR resource; and the PUSCH resource configuration information includes a slot location, a time-domain resource, a frequency-domain resource, a data modulation way and a hybrid automatic repeat request (HARQ) of the PUSCH resource.

According to a second aspect, the present application provides a data communication device, applied to a base station side, including a receiving module, a determining module, a processing module and a releasing module. The receiving module is configured to receive a scheduling request (SR) initiated by a user side, and determine a physical uplink shared channel (PUSCH) resource corresponding to the SR, wherein the PUSCH resource is an air interface resource pre-configured for the SR; the determining module is configured to determine whether the user side initiates uplink data according to the SR; the processing module is configured to process the uplink data according to the PUSCH resource in response to that the user side initiates the uplink data; and the releasing module is configured to release the PUSCH resource in response to that the user side does not initiate the uplink data.

According to a third aspect, the present application provides a base station equipment including a memory configured to store a computer program, and a processor configured to implement steps of any one of the above-mentioned data communication methods when executing the computer program.

According to a fourth aspect, the present application provides a computer-readable storage medium. A computer program is stored on the computer-readable storage medium, and when the computer program is executed by a processor, steps of any one of the above-mentioned data communication methods are implemented.

### BRIEF DESCRIPTION OF THE DRAWINGS

The accompanying drawings, which are incorporated in and constitute a part of this specification, illustrate embodiments consistent with the present application and together with the description serve to explain the principles of the present application.

In order to more clearly illustrate the technical solutions in some embodiments of the present application or in the related art, a brief introduction will be given to the accompanying drawings required in the description of the embodiments or the related art. Obviously, the accompanying drawings in the following description are only some embodiments of the present application. For those skilled in the art, other accompanying drawings can be obtained based on the structures shown in these drawings without any creative effort. Other drawings obtained also belong to the protection scope of the present application.
FIG. 1 is a schematic structural view of a data communication system according to the present application.
FIG. 2 is a schematic flow chart of a data communication method according to the present application.
FIG. 3 is a schematic flow chart of a resource configuration method according to the present application.
FIG. 4 is a schematic diagram of configuring an SR period according to the present application.
FIG. 5 is a schematic diagram of configuring a slot location of a PUSCH resource according to the present application.
FIG. 6 is a schematic diagram of configuring orthogonal frequency division multiplexing (OFDM) symbols and resource block (RB) according to the present application.
FIG. 7 is a schematic diagram of demodulating uplink data according to the present application.
FIG. 8 is a schematic diagram of reusing the PUSCH resource according to the present application.
FIG. 9 is a schematic structural view of a data communication device according to the present application.
FIG. 10 is a schematic structural view of a base station equipment according to the present application.

### DETAILED DESCRIPTION OF THE EMBODIMENTS

In order to make the purpose, technical solutions and advantages of this application clearer, the technical solutions of embodiments of the present application will be clearly and completely described with reference to the drawings in some embodiments of the present application. Obviously, the described embodiments are only some rather than all of the embodiments of the present application. Based on the embodiments of the present application, all other embodiments obtained by those skilled in the art without creative efforts shall fall within the scope of the present application.

5G technology supports three major applications: Enhanced Mobile Broadband (eMBB), Ultra Reliable Low Latency Communication (uRLLC), and Massive MachineType Communication (mMTC). uRLLC mainly involves two aspects, namely ultra-reliability and low latency. Low latency is a key application indicator of 5G for the toB industry.

During the data communication process between the UE side (user side) and the base station side, it mainly includes uplink data and downlink data. The uplink data process includes the UE side sending a scheduling request (SR), data size (BSR) and data information, while the downlink data process only requires the base station side to feed back packet information to the UE side. Obviously, uplink data has a longer delay than downlink data.

Therefore, how to effectively reduce the uplink data delay and achieve fast and efficient data communication is an urgent problem that needs to be solved by those skilled in the art.

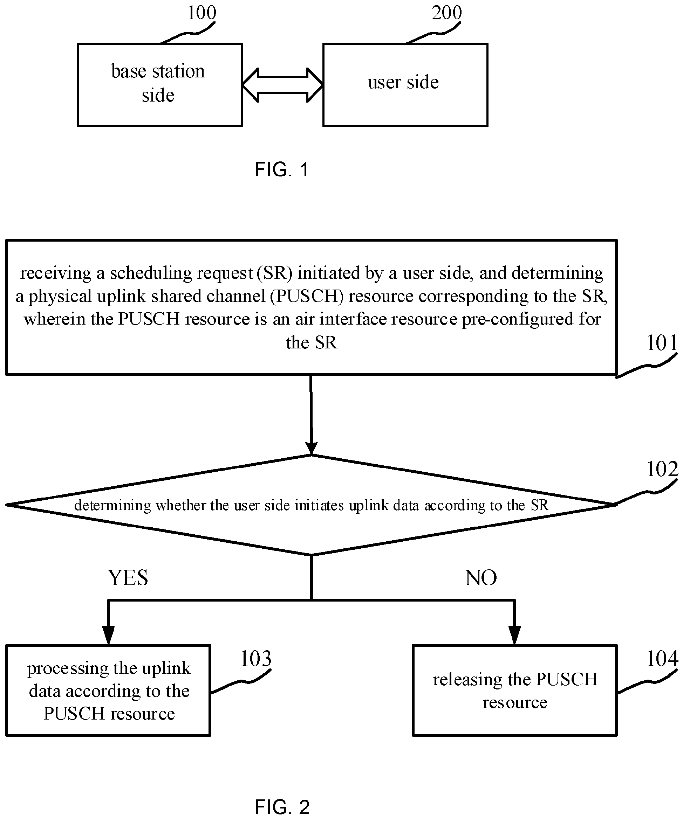

It should be noted that the data communication method provided by the present application can be applied to a data communication system. As shown in FIG. 1, FIG. 1 is a schematic structural view of a data communication system according to the present application. The data communication system may include a base station side 100 and a user side 200 (UE side) to realize data communication between the base station side 100 and the user side 200.

The present application provides a data communication method.

As shown in FIG. 2, FIG. 2 is a schematic flow chart of a data communication method according to the present application. The data communication method is applied to the base station side and may include the following steps S101 to S104.

Step S101, receiving a scheduling request (SR) initiated by a user side, and determining a physical uplink shared channel (PUSCH) resource corresponding to the SR, wherein the PUSCH resource is an air interface resource pre-configured for the SR.

This step is intended to realize the reception of the SR and the determination of the PUSCH resource corresponding to the SR.

First, when performing data communication between the user side and the base station side, the user side needs to first initiate an SR to the base station side. The SR is used to indicate whether there is data upload to inform the base station side that there is currently a need to upload data or there is no need to upload data. The SR is generally transmitted through the physical uplink control channel (PUCCH) and the size is 1 bit.

Secondly, for the base station side, after receiving the SR initiated by the user side, it can determine the corresponding PUSCH resource. The PUSCH resource is an air interface resource pre-configured for SR. Different SR periods correspond to different PUSCH resources, so that when the user side initiates uplink data corresponding to the SR, the PUSCH resource are used to process the uplink data. By configuring the PUSCH resource, the user side may upload uplink data immediately after initiating SR to the base station side without waiting for SR authorization, thereby effectively reducing the uplink data delay.

Step S102, determining whether the user side initiates uplink data according to the SR.

This step aims to determine whether there is uplink data, that is, to determine whether the user side initiates uplink data. The uplink data is the data message sent by the user side to the base station side. As mentioned above, the SR is used to indicate whether there is data upload to inform the base station side that there is currently a need to upload data or there is no need to upload data. Therefore, after receiving the SR, the base station side can determine whether the user side has initiated uplink data based on the SR. (that is, determine whether the user side has a need to upload data), and perform corresponding processing for different situations (with uplink data or without uplink data) during the subsequent communication process.

In a possible embodiment, the determining whether the user side initiates uplink data according to the SR includes: performing an energy detection on a time-frequency resource corresponding to the SR to obtain a resource energy value; in response to that the resource energy value exceeds a preset threshold, determining that the user side initiates the uplink data; or in response to that the resource energy value does not exceed the preset threshold, determining that the user side fails to initiate the uplink data.

The present application provides an implementation method for determining whether the user side initiates uplink data based on SR in the embodiment. In the implementation process, first, an energy detection is performed on the time-frequency resource (time domain resource + frequency domain resource) corresponding to the SR to obtain the corresponding resource energy value. The energy value detection process can refer to the existing technology and will not be described again in the present application. Afterward, it is determined whether the user side initiates uplink data according to the resource energy value. When the resource energy value exceeds the preset threshold, it can be determined that the user side has initiated uplink data. On the contrary, when the preset threshold does not exceeded the preset threshold, it can be determined that the user side has not initiated uplink data. It should be noted that the specific value of the preset threshold does not affect the implementation of this technical solution and can be set by technicians based on actual conditions, such as historical experience, current configuration requirements, etc. This application does not limit this.

Step S103, in response to that the user side initiates the uplink data, processing the uplink data according to the PUSCH resource.

This step is for the situation where the user side initiates uplink data. When it is determined based on the SR that the user side initiates uplink data, the PUSCH resource corresponding to the SR can be used to process the uplink data, that is, the uplink data is demodulated on the PUSCH corresponding to the SR. After the data processing is completed, the corresponding return packet information is generated and fed back to the user side, thereby completing data communication.

In a possible embodiment, the processing the uplink data according to the PUSCH resource includes: determining a data modulation way according to the PUSCH resource, wherein the data modulation way comprises quadrature phase shift keying (QPSK) and quadrature amplitude modulation (QAM); and modulating the uplink data according to the data modulation way.

The present application provides an implementation method for processing uplink data based on the PUSCH resource in the embodiment. In the implementation process, first, the data modulation way is determined based on the PUSCH resource. The data modulation way is the implementation way for demodulating uplink data, which can include but is not limited to QPSK, QAM, etc. In the process of configuring the PUSCH resource for the SR, the configuration content includes the data modulation way, therefore, the data modulation way of the uplink data can be determined according to the configuration information of the PUSCH resource. Further, after the data modulation way is determined, the uplink data can be demodulated according to the data modulation way, thereby completing processing the uplink data of the user side by the base station side.

Step S104, in response to that the user side does not initiate the uplink data, releasing the PUSCH resource.

This step is for the situation where the user side does not initiate uplink data. When it is determined based on the SR that the user side has not initiated uplink data, there is no need to process the uplink data. At this time, the PUSCH resource corresponding to the SR will no longer be used. Therefore, in order to avoid resource waste, the resource can be released, thereby configuring PUSCH resources for subsequent new SRs.

In a possible embodiment, before the releasing the PUSCH resource, the method further includes: obtaining a slot interval between a slot where the SR is located and a slot where the PUSCH resource is located; and in response to that the slot interval exceeds a configuration time of the PUSCH resource, releasing the PUSCH resource.

It can be understood that when the slot interval between the PUSCH resource and the SR resource is short, it means that less resources are occupied at this time. Therefore, there is no need to release the PUSCH resource to effectively reduce time waste. During the implementation process, when it is determined based on the SR that the user side has not initiated uplink data, it can be further determined whether the slot interval between the slot where the SR resource is located and the slot where the PUSCH resource is located exceeds the configuration time of the PUSCH resource. The configuration time of the PUSCH resource is PUSCH preparation time. When the slot interval exceeds the PUSCH resource configuration time, it means that PUSCH resources occupy a lot. At this time, resources can be released to effectively reduce resource waste; conversely, when the slot interval does not exceed configuration time of the PUSCH resource, it shows that the PUSCH resource is less occupied. At this time, there is no need to release the PUSCH resource and the next SR can be continued to process, thereby effectively reducing time waste.

In a possible embodiment, after releasing the PUSCH resource, the method further includes: determining a reserved resource after releasing the PUSCH resource; and dynamically authorizing for other PUSCH resources corresponding to other SRs based on the reserved resource.

As mentioned above, in order to avoid resource waste, the PUSCH resource can be released to provide PUSCH resources for subsequent new SRs. Therefore, the reserved resource obtained after releasing the PUSCH resource can be used to configure corresponding PUSCH resources for other SRs, thereby achieving dynamic authorization of the SR. As a result, reuse of resources after release is achieved and resource waste is avoided.

It can be seen that in data communication method provided by the embodiment of the present application, by pre-configuring the PUSCH resource for the SR initiated by the user side, the user side can immediately send uplink data after initiating the SR to the base station side without waiting for authorization from the base station side, thereby effectively reducing the uplink data delay. Meanwhile, after receiving the SR initiated by the user side, the base station side can directly determine whether the user side initiates uplink data based on the SR, and directly use the PUSCH resource corresponding to the SR after confirming that the user side initiates uplink data, to process the uplink data without the need for SR authorization, which further improves data communication efficiency. In addition, when it is confirmed that the user side does not initiate uplink data, the PUSCH resource is directly released, thereby effectively reducing resource consumption.

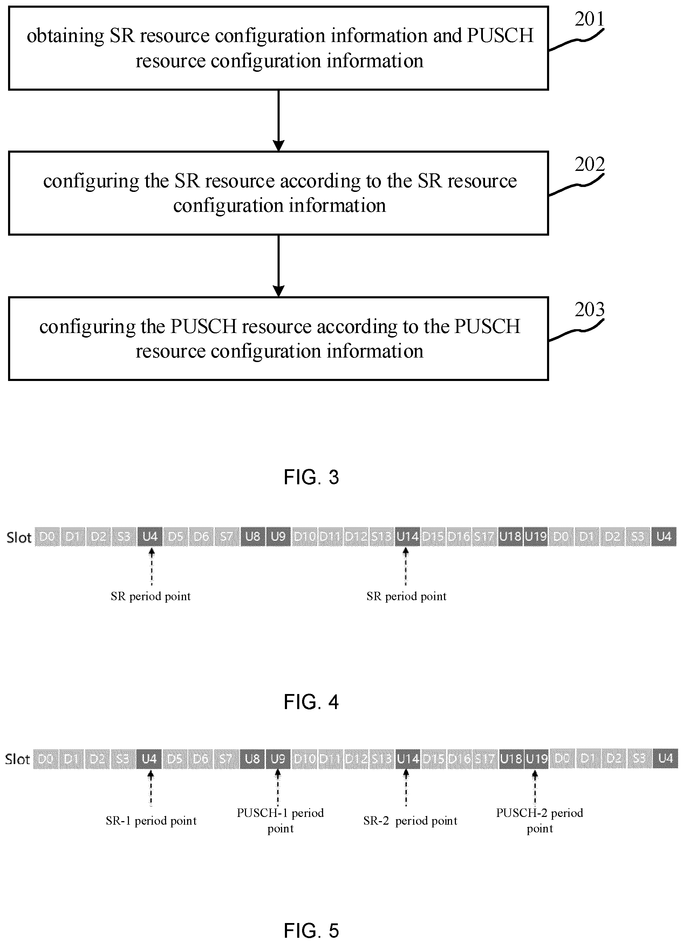

Based on the above embodiments of the present application, as shown in FIG. 3, FIG. 3 is a schematic flow chart of a resource configuration method according to the present application, the resource configuration method may include step S201 to step S203.

Step S201, obtaining SR resource configuration information and PUSCH resource configuration information. Step S202, configuring the SR resource according to the SR resource configuration information. Step S203, configuring the PUSCH resource according to the PUSCH resource configuration information.

As mentioned above, the PUSCH resource is an air interface resource pre-configured for SR. Therefore, before establishing data communication between the base station side and the user side, it's necessary to configure resources. The configuration content includes SR resources and PUSCH resources. The embodiment of the present application provides a method for configuring SR resources and PUSCH resources.

During the implementation process, technicians can input configuration information through the front-end visual interface. The configuration information includes SR resource configuration information and PUSCH resource configuration information. Therefore, the base station side can implement SR resource configuration based on the SR resource configuration information, and can implement PUSCH resource configuration based on the PUSCH resource configuration information.

In a possible embodiment, the SR resource configuration information includes a resource unit of the SR resource and a resource period of the SR resource; the PUSCH resource configuration information includes a slot location, a time-domain resource, a frequency-domain resource, a data modulation way and a hybrid automatic repeat request (HARQ) of the PUSCH resource.

The present application provides specific configuration content of SR resource configuration information and PUSCH resource configuration information. The implementation process of SR resource configuration and PUSCH resource configuration based on the above configuration content may include:
1). Implementing SR resource configuration:
   1. Obtaining current business information;
   2. Configuring SR resources according to the current business attributes, wherein the configuration content includes:
      (1) Resource unit: slot or minislot;
      (2) Resource period: slot interval or minislot interval;
         C. End.
2). Implementing PUSCH resource configuration:
   1. Configuring the slot (or minislot) location of PUSCH: taking the slot (or minislot) location of SR as the reference point and the granularity of SR as the interval granularity, configuring the interval length from SR to PUSCH, and recording the interval length as K1;
   2. Configuring the time domain resource of PUSCH: within a given slot (or minislot), determining the starting position and length of the orthogonal frequency division multiplexing (OFDM) symbols of PUSCH;
   3. Configuring the frequency domain resource of PUSCH: within a given slot, determining the starting position and length of the RB of PUCH;
   4. Configuring the modulation way of PUSCH: modulation methods including QPSK, QAM, etc.;
   5. Configuring the HARQ resources of PUSCH by the following two implementation methods:
      (1) Configuring HARQ to ensure correct PUSCH demodulation as much as possible;
      (2) Reserving HARQ-ID;
   6. Configuring radio resource control (RRC) signaling to facilitate PUSCH resource configuration or reconfiguration of the UE;
   7. End.

Thus, the configuration of SR resources and PUSCH resources is realized.

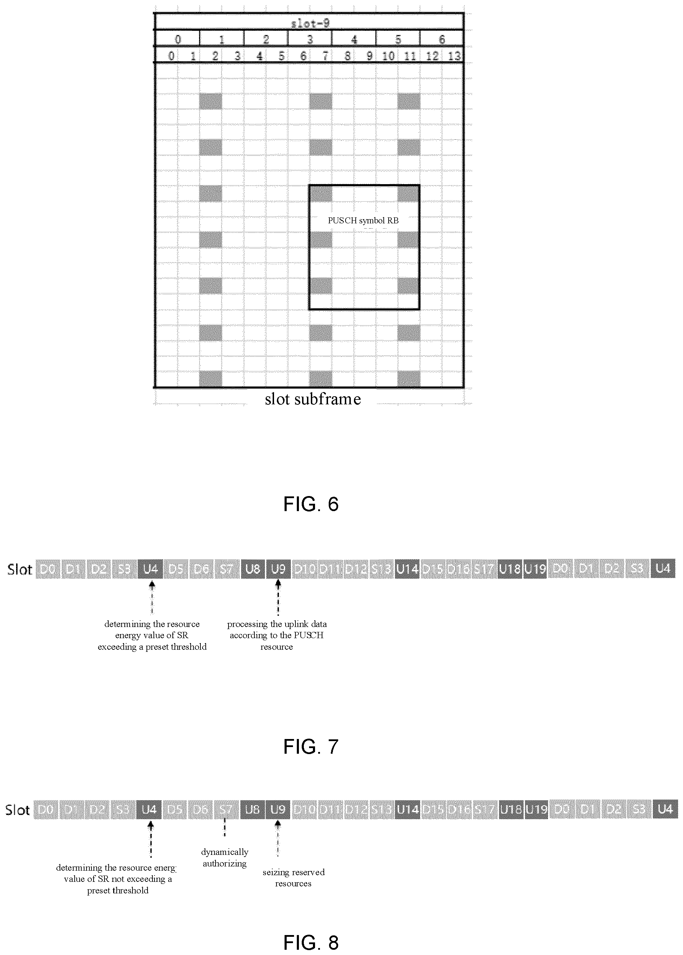

Combining the above embodiments of the resource configuration method and the embodiments of the data communication method, in some embodiments, the present application provides another data communication method, the specific implementation process of which may include:
Step S1, Configuring SR period resources, as shown in FIG. 4, FIG. 4 is schematic diagram of configuring an SR period according to the present application. The SR period is configured as 10 slots, and the specific location is slot-4/slot-1 4;
Step S2, Configuring the slot where the PUSCH resource is located for each period point, as shown in FIG. 5, FIG. 5 is a schematic diagram of configuring a slot location of a PUSCH resource according to the present application. It can be seen that K1 is 5, and the PUSCH-slots corresponding to SR are slot-9/slot-19 respectively;
Step S3, Configuring PUSCH time-frequency resources, including OFDM symbol information and RB information, as shown in FIG. 6, FIG. 6 is a schematic diagram of configuring orthogonal frequency division multiplexing (OFDM) symbols and resource block (RB) according to the present application;
Step S4, Configuring the modulation method and HARQ-ID of PUSCH;
Step S5, Performing an energy detection on the time-frequency resource corresponding to the SR. If the detection value exceeds the preset threshold, it is considered that there is uplink data and entering step S6, otherwise entering step S7;
Step S6, Demodulating uplink data on the corresponding PUSCH, as shown in FIG. 7, FIG. 7 is a schematic diagram of demodulating uplink data according to the present application, and entering to step S9;
Step S7, Determining whether K1 exceeds K2 (PUSCH preparation time), if so, entering step S8, otherwise entering step S9;
Step S8, reusing PUSCH: performing dynamic authorization of other PUSCHs and seizing reserved resources, as shown in FIG. 8, FIG. 8 is a schematic diagram of reusing the PUSCH resource according to the present application;
Step S9, End.

It can be seen that in data communication method provided by the embodiment of the present application, by pre-configuring the PUSCH resource for the SR initiated by the user side, the user side can immediately send uplink data after initiating the SR to the base station side without waiting for authorization from the base station side, thereby effectively reducing the uplink data delay. Meanwhile, after receiving the SR initiated by the user side, the base station side can directly determine whether the user side initiates uplink data based on the SR, and directly use the PUSCH resource corresponding to the SR after confirming that the user side initiates uplink data to process the uplink data without the need for SR authorization, which further improves data communication efficiency. In addition, when it is confirmed that the user side does not initiate uplink data, the PUSCH resource is directly released, thereby effectively reducing resource consumption.

The present application provides a data communication device.

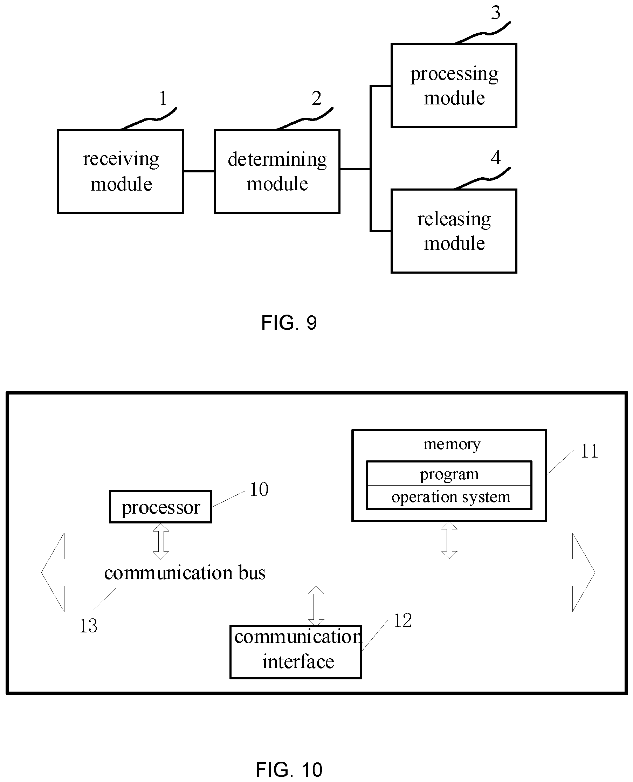

As shown in FIG. 9, FIG. 9 is a schematic structural view of a data communication device according to the present application. The data communication device is applied to the base station side and may include: a receiving module 1, a determining module 2, a processing module 3 and a releasing module 4.

The receiving module 1 is configured to receive a scheduling request (SR) initiated by a user side, and determine a physical uplink shared channel (PUSCH) resource corresponding to the SR. The PUSCH resource is an air interface resource pre-configured for the SR. The determining module 2 is configured to determine whether the user side initiates uplink data according to the SR. The processing module 3 is configured to process the uplink data according to the PUSCH resource in response to that the user side initiates the uplink data. The releasing module 4 is configured to release the PUSCH resource in response to that the user side does not initiate the uplink data.

It can be seen that in data communication method provided by the embodiment of the present application, by pre-configuring the PUSCH resource for the SR initiated by the user side, the user side can immediately send uplink data after initiating the SR to the base station side without waiting for authorization from the base station side, thereby effectively reducing the uplink data delay. Meanwhile, after receiving the SR initiated by the user side, the base station side can directly determine whether the user side initiates uplink data based on the SR, and directly use the PUSCH resource corresponding to the SR after confirming that the user side initiates uplink data to process the uplink data without the need for SR authorization, which further improves data communication efficiency. In addition, when it is confirmed that the user side does not initiate uplink data, the PUSCH resource is directly released, thereby effectively reducing resource consumption.

In an embodiment of the present application, the above-mentioned determining module 2 can be specifically configured to perform energy detection on the time-frequency resource corresponding to the SR to obtain the resource energy value. When the resource energy value exceeds the preset threshold, it is determined that the user side initiates uplink data; When the resource energy value does not exceed the preset threshold, it is determined that the user side has not initiated uplink data.

In an embodiment of the present application, the above-mentioned processing module 3 can be specifically configured to determine the data modulation way according to the PUSCH resource. The data modulation way includes QPSK and QAM. In addition, according to the data modulation way, the uplink data is modulated.

In an embodiment of the present application, the data communication device may further include a time determining module configured to obtain a slot interval between a slot where the SR is located and a slot where the PUSCH resource is located, and in response to that the slot interval exceeds a configuration time of the PUSCH resource, release the PUSCH resource.

In an embodiment of the present application, the data communication device may further include a resource reconfiguration module configured to determine a reserved resource after releasing the PUSCH resource, and dynamically authorize for other PUSCH resources corresponding to other SRs based on the reserved resource.

In an embodiment of the present application, the data communication device may further include a resource configuration module configured to obtain SR resource configuration information and PUSCH resource configuration information, configure the SR resource according to the SR resource configuration information, and configure the PUSCH resource according to the PUSCH resource configuration information.

The introduction to the device provided by the present application can refer to the above method embodiments, and the present application will not be described in detail here.

The present application provides a base station equipment.

As shown in FIG. 10, FIG. 10 is a schematic structural view of a base station equipment according to the present application. The base station equipment may include a memory, configured to store a computer program; and a processor, configured to implement steps of any one of the above-mentioned data communication methods when executing the computer program.

As shown in FIG. 10, FIG. 10 is a schematic structural view of a base station equipment. The base station equipment may include: a processor 10, a memory 11, a communication interface 12 and a communication bus 13. The processor 10, the memory 11, and the communication interface 12 all communicate with each other through the communication bus 13.

In the present application, the processor 10 may be a central processing unit (CPU), an application-specific integrated circuit, a digital signal processor, a field programmable gate array, or other programmable logic devices. The processor 10 can call the program stored on the memory 11. In an exemplary embodiment, the processor 10 can perform the operations in the embodiment of the data communication method.

The memory 11 is configured to store one or more programs. The program may include program codes, and the program codes include computer operation instructions. In the present application, the memory 11 at least stores programs for implementing the following functions: receiving a scheduling request (SR) initiated by a user side, and determining a physical uplink shared channel (PUSCH) resource corresponding to the SR, wherein the PUSCH resource is an air interface resource pre-configured for the SR; determining whether the user side initiates uplink data according to the SR; in response to that the user side initiates the uplink data, processing the uplink data according to the PUSCH resource; in response to that the user side does not initiate the uplink data, releasing the PUSCH resource.

In a possible embodiment, the memory 11 may include a program storage area and a data storage area, the program storage area may store an operating system and at least one application program required for a function, etc., and the storage data area may store data created during use.

In addition, the memory 11 may include high-speed random access memory, and may also include non-volatile memory, such as at least one magnetic disk storage device or other volatile solid-state storage device.

The communication interface 12 may be an interface of a communication module, used to connect with other devices or systems.

It should be noted that the structure shown in FIG. 10 does not constitute a limitation on the base station equipment in the present application. In actual applications, the base station equipment may include more or less components than those shown in FIG. 10, or a combination of certain components.

The present application provides a computer-readable storage medium. A computer program is stored on the computer-readable storage medium, and when the computer program is executed by a processor, steps of any one of the above- mentioned data communication methods are implemented.

The computer-readable storage medium can include a U disk, a mobile hard disk, a read-only memory (ROM), a random access memory (RAM), a magnetic disk and an optical disk, etc., which can store program code.

The introduction to the computer-readable storage medium provided by the embodiments of the present application can refer to the above method embodiments, and the embodiments of the present application will not be described in detail here.

A data communication method provided by the present application includes: receiving an SR initiated by a user side, and determining a PUSCH resource corresponding to the SR, wherein the PUSCH resource is an air interface resource pre-configured for the SR; determining whether the user side initiates uplink data according to the SR; in response to that the user side initiates the uplink data, processing the uplink data according to the PUSCH resource; and in response to that the user side does not initiate the uplink data, releasing the PUSCH resource. It can be seen that by pre-configuring a PUSCH resource for the SR initiated by the user side, the user side can send uplink data immediately after initiating the SR to the base station side without waiting for authorization from the base station side, thereby effectively reducing the uplink data delay. Meanwhile, after receiving the SR initiated by the user side, the base station side can directly determine whether the user side initiates uplink data based on the SR, and after confirming that the user side initiates the uplink data, the base station side directly uses the PUSCH resource corresponding to the SR to process the uplink data without the need for SR authorization, thereby further improving data communication efficiency. In addition, when it is confirmed that the user side has not initiated uplink data, the PUSCH resource is directly released, thereby effectively reducing resource consumption.

When adapting the technical solution disclosed in the present application, by pre-configuring the PUSCH resource for the SR initiated by the user side, the user side can immediately send uplink data after initiating the SR to the base station side without waiting for authorization from the base station side, thereby effectively reducing the uplink data delay and further improving data communication efficiency.

Each embodiment in the specification is described in a progressive manner. Each embodiment focuses on its differences from other embodiments. The same and similar parts between the various embodiments can be referred to each other. As for the device disclosed in the embodiment, since it corresponds to the method disclosed in the embodiment, the description is relatively simple. The relevant details can refer to the description in the method section.

Those skilled in the art may further realize that the units and algorithm steps described in the embodiments disclosed herein can be implemented by electronic hardware, computer software, or a combination of both. In order to clearly illustrate the interchangeability of hardware and software, in the above description, the composition and steps of each embodiment have been generally described according to functions. Whether these functions are performed in hardware or software depends on the specific application and design constraints of the technical solution. Those skilled may implement the described functions using different methods for each specific application, but such implementations should not be considered beyond the scope of this application.

The technical solution provided by the present application has been introduced in detail above. This article uses specific examples to illustrate the principles and implementation methods of this application. The description of the above embodiments is only used to help understand the method and its core idea of the present application. It should be noted that those skilled in the art can make several improvements and modifications to the present application without departing from the principles of the present application, and these improvements and modifications also fall within the protection scope of the present application.

## Claims

1. A data communication method, applied to a base station side, **characterized by** comprising:
receiving a scheduling request (SR) initiated by a user side, and determining a physical uplink shared channel (PUSCH) resource corresponding to the SR, wherein the PUSCH resource is an air interface resource pre-configured for the SR;
determining whether the user side initiates uplink data according to the SR;
in response to that the user side initiates the uplink data, processing the uplink data according to the PUSCH resource; or
in response to that the user side does not initiate the uplink data, releasing the PUSCH resource.

2. The method according to claim 1, wherein the determining whether the user side initiates uplink data according to the SR comprises:
performing an energy detection on a time-frequency resource corresponding to the SR to obtain a resource energy value;
in response to that the resource energy value exceeds a preset threshold, determining that the user side initiates the uplink data; or
in response to that the resource energy value does not exceed a preset threshold, determining that the user side fails to initiate the uplink data.

3. The method according to claim 1, wherein the processing the uplink data according to the PUSCH resource comprises:
determining a data modulation way according to the PUSCH resource, wherein the data modulation way comprises quadrature phase shift keying (QPSK) and quadrature amplitude modulation (QAM); and
modulating the uplink data according to the data modulation way.

4. The method according to claim 1, wherein before the releasing the PUSCH resource, the method further comprises:
obtaining a slot interval between a slot where the SR is located and a slot where the PUSCH resource is located; and
in response to that the slot interval exceeds a configuration time of the PUSCH resource, releasing the PUSCH resource.

5. The method according to claim 1, wherein after the releasing the PUSCH resource, the method further comprises:
determining a reserved resource after releasing the PUSCH resource; and
dynamically authorizing for other PUSCH resources corresponding to other SRs based on the reserved resource.

6. The method according to any one of claims 1 to 5, wherein before the receiving the SR initiated by the user side, the method further comprises:
obtaining SR resource configuration information and PUSCH resource configuration information;
configuring the SR resource according to the SR resource configuration information; and
configuring the PUSCH resource according to the PUSCH resource configuration information.

7. The method according to claim 5, wherein the SR resource configuration information comprises a resource unit of the SR resource and a resource period of the SR resource; and the PUSCH resource configuration information comprises a slot location, a time-domain resource, a frequency-domain resource, a data modulation way and a hybrid automatic repeat request (HARQ) of the PUSCH resource.

8. A data communication device, applied to a base station side, **characterized by** comprising:
a receiving module, configured to receive a scheduling request (SR) initiated by a user side, and determine a physical uplink shared channel (PUSCH) resource corresponding to the SR, wherein the PUSCH resource is an air interface resource pre-configured for the SR;
a determining module, configured to determine whether the user side initiates uplink data according to the SR;
a processing module, configured to process the uplink data according to the PUSCH resource in response to that the user side initiates the uplink data; and
a releasing module, configured to release the PUSCH resource in response to that the user side does not initiate the uplink data.

9. A base station equipment, **characterized by** comprising:
a memory, configured to store a computer program; and
a processor, configured to implement steps of the data communication method according to any one of claims 1 to 7 when executing the computer program.

10. A computer-readable storage medium, **characterized in that** a computer program is stored on the computer-readable storage medium, and when the computer program is executed by a processor, steps of the data communication method according to any one of claims 1 to 7 are implemented.
